# EUROPEAN PATENT APPLICATION

(11) **EP 4 491 256 A1**
(43) Date of publication of application: **15.01.2025**
(21) Application number: 24182980.3
(22) Date of filing: 19.06.2024
(51) Int. Cl.: B01D 53/04, B01D 53/26, F25B 43/00

(54) **GAS-LIQUID SEPARATION DEVICE ENSURING THE EFFECT OF GAS-LIQUID SEPARATION**

(30) Priority: 20.06.2023 CN 202310739479
(71) Applicant: Zhejiang Sanhua Intelligent Controls Co., Ltd., Shaoxing City, Zhejiang 312500 (CN)
(72) Inventor: WANG, Mei, Shaoxing City , Zhejiang, 312500 (CN); CAO, Chaochao, Shaoxing City , Zhejiang, 312500 (CN); SHI, Haimin, Shaoxing City , Zhejiang, 312500 (CN)
(74) Representative: Michalski Hüttermann & Partner Patentanwälte mbB

(57) **Abstract**

A gas-liquid separation device (200) includes a molecular sieve assembly (100). The molecular sieve assembly (100) includes a gas collecting pipe (4), a molecular sieve package (5), a first bracket (61) and a second bracket (62). The gas collecting pipe (4) includes a pipe wall with a hollow interior to form an inner cavity. The pipe wall has an inner surface facing the inner cavity and an outer surface (41) facing away from the inner cavity. The first bracket (61) and the second bracket (62) are both connected to the outer surface (41) of the gas collecting pipe (4). The first bracket (61) and the second bracket (62) are located on two opposite sides of the molecular sieve package (5) along an extension direction of the gas collecting pipe (4), to limit displacement of the molecular sieve package (5) in the extension direction of the gas collecting pipe (4).

## Description

### CROSS-REFERENCE TO RELATED APPLICATION

This patent application claims priority of a Chinese Patent Application No. 202310739479.X, filed on June 20, 2023 and titled "GAS-LIQUID SEPARATION DEVICE", the entire content of which is incorporated herein by reference.

### TECHNICAL FIELD

The present invention relates to a field of gas-liquid separation, in particular to a gas-liquid separation device.

### BACKGROUND

A gas-liquid separation device is equipped with a molecular sieve package, which includes a molecular sieve bag and a lot of molecular sieve particles. The molecular sieve bag is usually made of non-woven fabric and the molecular sieve particles (also called desiccant) are located inside the molecular sieve bag. Molecular sieve particles can effectively remove moisture in a heat exchange system and ensure stable operation of the heat exchange system. The molecular sieve package is fixed to a gas collecting pipe through a cable tie. The cable tie can only limit a radial movement of the molecular sieve package. During a long-term operation, the molecular sieve package may slide along the gas collecting pipe and block a gas collection opening of the gas collecting pipe, affecting the functions of gas-liquid separation and compressor-oil return.

### SUMMARY

An object of the present invention is to provide a gas-liquid separation device which can prevent the movement of a molecular sieve package along the extension direction of a gas collecting pipe, thereby ensuring the effect of gas-liquid separation.

In order to achieve the above object, the present invention adopts the following technical solution: a gas-liquid separation device includes a molecular sieve assembly. The molecular sieve assembly includes a gas collecting pipe, a molecular sieve package, a first bracket and a second bracket. The gas collecting pipe includes a pipe wall with a hollow interior to form an inner cavity. The pipe wall has an inner surface facing the inner cavity and an outer surface facing away from the inner cavity. The first bracket and the second bracket are both connected to the outer surface of the gas collecting pipe. The first bracket and the second bracket are located on two opposite sides of the molecular sieve package along an extension direction of the gas collecting pipe, to limit displacement of the molecular sieve package in the extension direction of the gas collecting pipe.

The present invention limits the displacement of the molecular sieve package in the extension direction of the gas collecting pipe through the first bracket and the second bracket, which are located on opposite sides of the molecular sieve package. Therefore, the present invention prevents the movement of the molecular sieve package along the extension direction of the gas collecting pipe, and especially prevents the molecular sieve package from moving to the gas collection opening of the gas collecting pipe, thereby preventing the gas collection opening of the gas collecting pipe from being blocked by the molecular sieve package, thereby ensuring the effect of gas-liquid separation.

### BRIEF DESCRIPTION OF DRAWINGS

FIG. 1 is a perspective, assembled view of a gas-liquid separation device in accordance with the present invention;
FIG. 2 is a top plane view of the gas-liquid separation device of the present invention;
FIG. 3 is a cross-sectional view taken along line A-A in FIG. 2;
FIG. 4 is a perspective, partly exploded view of the gas-liquid separation device in accordance with the present invention;
FIG. 5 is a perspective, exploded view of a heat exchange assembly, a first cylinder and its internal components in accordance with the present invention;
FIG. 6 is a perspective, exploded view of the first cylinder and its internal components in accordance with the present invention;
FIG. 7 is similar to FIG. 6 but taken view from another angle;
FIG. 8 is a perspective, exploded view of a molecular sieve package and a gas collecting pipe in accordance with the present invention;
FIG. 9 is similar to FIG. 8 but taken view from another angle;
FIG. 10 is a cross-sectional view taken along line B-B in FIG. 9;
FIG. 11 is a cross-sectional view taken along line C-C in FIG. 9;
FIG. 12 is a left view of the gas collecting pipe and a plurality of brackets in the combined state of the gas-liquid separation device of the present invention;
FIG. 13 is a front view of the gas collecting pipe and the brackets in the combined state of the gas-liquid separation device of the present invention;
FIG. 14 is a right view of the gas collecting pipe and the brackets in the combined state of the gas-liquid separation device of the present invention; and
FIG. 15 is a cross-sectional view taken along line D-D in FIG. 7.

### DETAILED DESCRIPTION

Exemplary embodiments will be described in detail here, examples of which are shown in drawings. When referring to the drawings below, unless otherwise indicated, same numerals in different drawings represent the same or similar elements. The examples described in the following exemplary embodiments do not represent all embodiments consistent with this application. Rather, they are merely examples of devices and methods consistent with some aspects of the application as detailed in the appended claims.

The terminology used in this application is only for the purpose of describing particular embodiments, and is not intended to limit this application. The singular forms "a", "said", and "the" used in this application and the appended claims are also intended to include plural forms unless the context clearly indicates other meanings.

It should be understood that the terms "first", "second" and similar words used in the specification and claims of this application do not represent any order, quantity or importance, but are only used to distinguish different components. Similarly, "an" or "a" and other similar words do not mean a quantity limit, but mean that there is at least one; "multiple" or "a plurality of' means two or more than two. Unless otherwise noted, "front", "rear", "lower" and/or "upper" and similar words are for ease of description only and are not limited to one location or one spatial orientation. Similar words such as "include" or "comprise" mean that elements or objects appear before "include" or "comprise" cover elements or objects listed after "include" or "comprise" and their equivalents, and do not exclude other elements or objects. The term "a plurality of" mentioned in the present invention includes two or more.

Hereinafter, some embodiments of the present invention will be described in detail with reference to the accompanying drawings. In the case of no conflict, the following embodiments and features in the embodiments can be combined with each other.

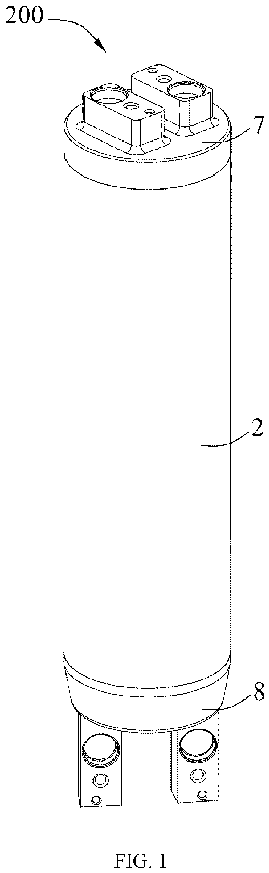

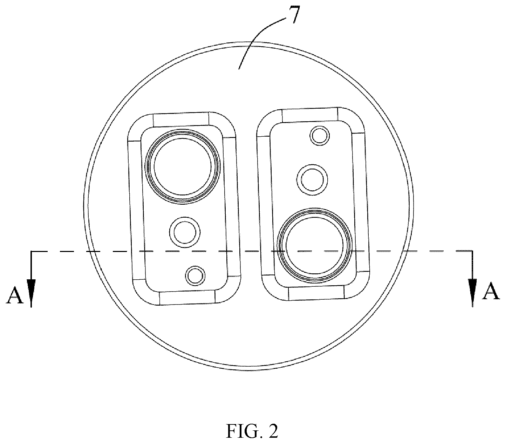

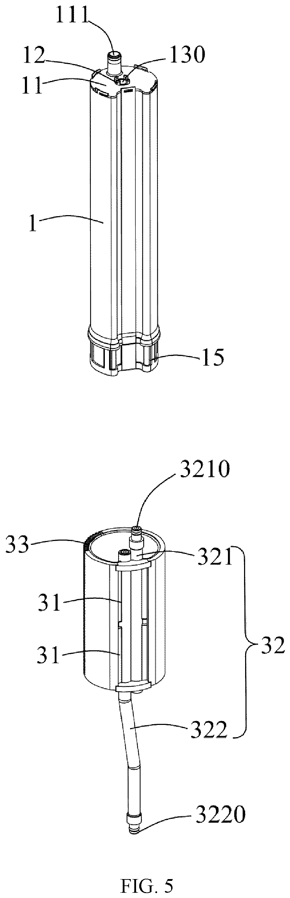

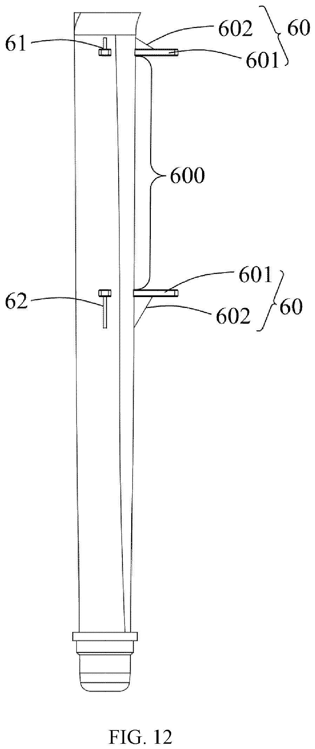

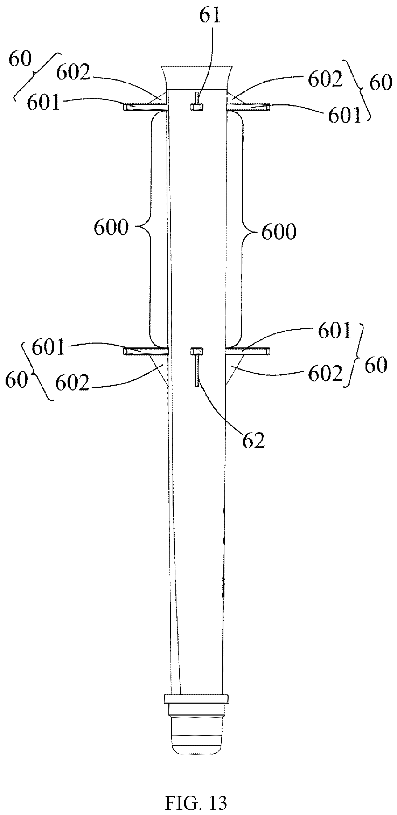

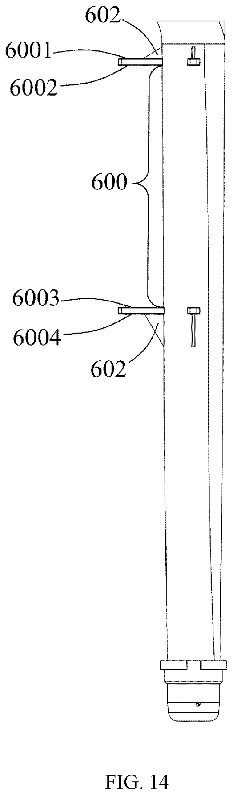

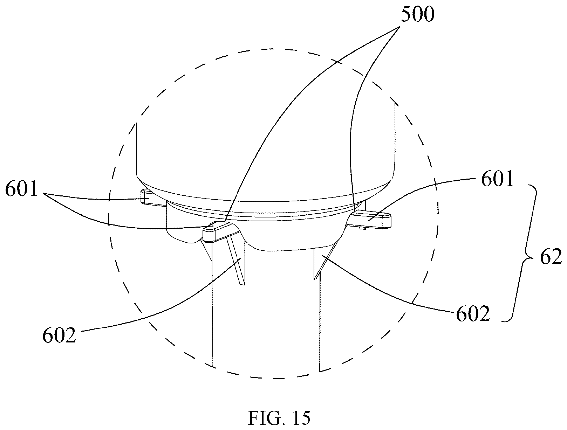

Referring to FIG. 1 to FIG. 15, the present invention relates to a molecular sieve assembly 100, which includes a gas collecting pipe 4, a molecular sieve package 5 and a plurality of brackets 6. The brackets 6 includes a first bracket 61 and a second bracket 62. The gas collecting pipe 4 has a pipe wall (not numbered) with a hollow interior to form an inner cavity. The pipe wall has an inner side (not numbered) facing the inner cavity and an outer surface 41 facing away from the inner cavity. The first bracket 61 and the second bracket 62 are both connected to the outer surface 41. Along the extension direction of the gas collecting pipe 4, the first bracket 61 and the second bracket 62 are located on opposite sides of the molecular sieve package 5 to limit the displacement of the molecular sieve package 5 in the extension direction of the gas collecting pipe 4. Since the molecular sieve assembly 100 of the present invention includes two rows of brackets 6 (including both the first bracket 61 and the second bracket 62) respectively located on opposite sides of the molecular sieve package 5 (in the specific embodiment, the two rows of brackets 6 are defined along the extension direction of the gas collecting pipe 4 which is defined as an up-and-down direction, i.e., the first bracket 61 is located above the molecular sieve package 5 and the second bracket 62 is located below the molecular sieve package 5), and therefore, the present invention utilizes two rows of brackets 6 to limit the displacement of the molecular sieve package 5 in the extension direction of the gas collecting pipe 4. Since the displacement of the molecular sieve package 5 in the extension direction of the gas collecting pipe 4 is prevented, the molecular sieve package 5 is prevented from moving to a gas collection opening of the gas collecting pipe 4 and blocking the gas collection opening of the gas collecting pipe 4, thereby ensuring the effect of gas-liquid separation.

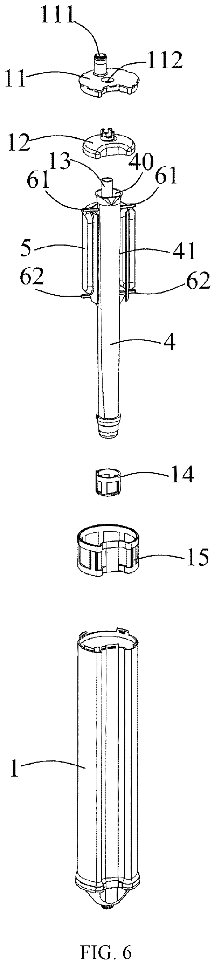

Referring to FIG. 6 to FIG. 10, each of the first bracket 61 and the second bracket 62 includes a plurality of bracket units 60. Each bracket unit 60 includes a first component 601 and the molecular sieve package 5 is in contact with the first component 601. The first component 601 extends from the outer surface 41 of the gas collecting pipe 4 in a direction away from the inner cavity of the pipe wall. Optionally, an extending direction of the first component 601 is perpendicular to the extension direction of the gas collecting pipe 4. The first component 601 can be used to support the molecular sieve package 5. The upper and lower rows of first components 601 of the brackets 6 jointly provide the molecular sieve package 5 with a limiting effect. Optionally, the limiting function is clamping force. Specifically, the second bracket 62 below the molecular sieve package 5 provides upward support for the molecular sieve package 5, and the first bracket 61 above the molecular sieve package 5 provides downward support for the molecular sieve package 5. Therefore, the present invention can prevent the movement of the molecular sieve package 5 in the extension direction of the gas collecting pipe 4, especially the movement of the molecular sieve package 5 toward the gas collection opening of the gas collecting pipe 4.

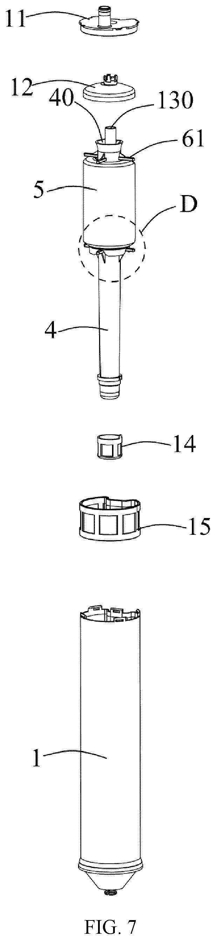

Referring to FIG. 7 to FIG. 9 and FIG. 15, the molecular sieve package 5 includes a body portion 51 and a notch portion 50. The body portion 51 and the notch portion 50 are connected to each other. The notch portion 50 is located on at least one side of the body portion 51 along the extending direction of the gas collecting pipe 4. The notch portion 50 has a recess place 500 opening away from the body portion 51, and the first component 601 is partially received in the recess place 500. The function of the recess place 500 is to ensure the positioning accuracy of the molecular sieve package 5 on the gas collecting pipe 4 through the cooperation between the first component 601 and the recess place 500, thus ensuring that the installation of the molecular sieve package 5 on the gas collecting pipe 4 does not deviate from the correct position.

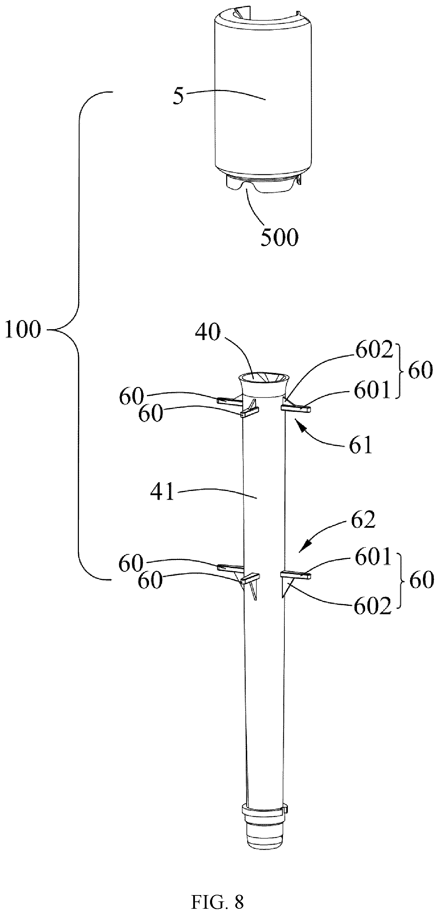

Referring to FIG. 8 to FIG. 11, the first component 601 includes a root portion 6011 and a free end portion 6012. The root portion 6011 is fixedly connected to the outer surface 41 of the gas collecting pipe 4. The free end portion 6012 is further away from the outer surface 41 of the gas collecting pipe 4 than the root portion 6011. The size of the root portion 6011 is larger than the size of the free end portion 6012, thus ensuring the firmness of the root portion 6011 and the convenience of inserting the free end portion 6012 into the recess place 500.

Referring to FIG. 7 to FIG. 11, each bracket unit 60 includes a second component 602 connected to the outer surface 41 of the gas collecting pipe 4 and the first component 601. The function of the second component 602 is to provide reinforcement to the first component 601 after the position of the molecular sieve package 5 is limited by the first component 601, further enhancing the stability of limiting the position of the molecular sieve package 5.

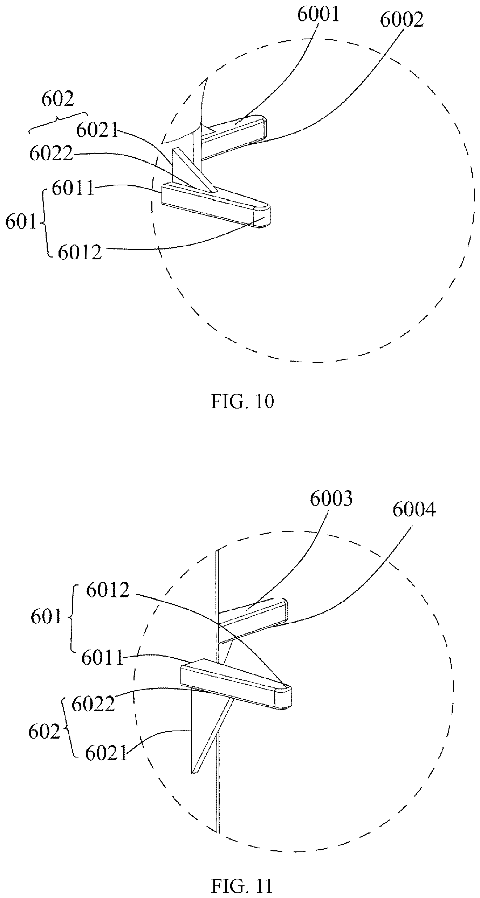

Referring to FIG. 10 and FIG. 11, in one embodiment, the second component 602 is a triangular plate, which makes the structure of the second component 602 simple and easy to form, thereby facilitating installation and positioning. One right-angled side 6021 of the second component 602 is connected to the outer surface 41 of the gas collecting pipe 4, and the other right-angled side 6022 of the second component 602 is connected to the first component 601. The second component 602 connects the outer surface 41 of the gas collecting pipe 4 and the first component 601 to provide reinforcement to the first component 601. In other embodiments, the second component 602 can be a fan-shaped plate, or a plate of other shapes, as long as it has two right-angled sides to achieve connection and support functions.

Referring to FIG. 10 to FIG. 14, a limiting space 600 is defined between the first bracket 61 and the second bracket 62. The body portion 51 is located in the limiting space 600. The first component 601 of the first bracket 61 includes a first side 6001 facing away from the limiting space 600 and a second side 6002 facing the limiting space 600. The second component 602 of the first bracket 61 is located on the first side 6001 of the first component 601 of the first bracket 61. The molecular sieve package 5 is in contact with the second side 6002 of the first component 601 of the first bracket 61. The first component 601 of the second bracket 62 includes a third side 6003 facing the limiting space 600 and a fourth side 6004 facing away from the limiting space 600. The second component 602 of the second bracket 62 is located on the fourth side 6004 of the first component 601 of the second bracket 62. The molecular sieve package 5 is in contact with the third side 6003 of the first component 601 of the second bracket 62.

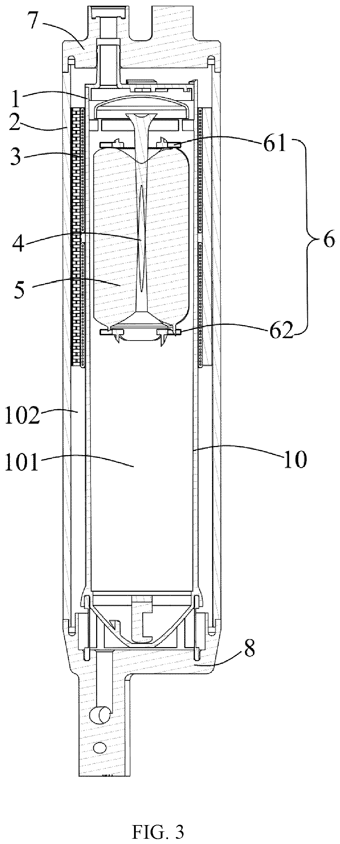

Referring to FIG. 3 and FIG. 6 to FIG. 10, after the gas collecting pipe 4 is installed in place, if the extending direction of the gas collecting pipe 4 is the up and down direction relative to the ground, the first bracket 61 and the second bracket 62 are said to be arranged in two rows up and down. The first bracket 61 is an upper row bracket and the second bracket 62 is a lower row bracket. The second component 602 of the first bracket 61 is located above the first component 601 of the first bracket 61 and the second component 602 of the second bracket 62 is located below the first component 601 of the second bracket 62. Because the second component 602 of the first bracket 61 and the second component 602 of the second bracket 62 are respectively located on opposite sides of the molecular sieve package 5, the present invention can provide better positioning stability. On the basis of better positioning stability, it will not hinder the assembly of the molecular sieve package 5 and the gas collecting pipe 4. In short, along the up and down direction in which the gas collecting pipe 4 extends, the second component 602 is further away from the limiting space 600 than the first component 601. That is to say, the second component 602 is further away from the main body 51 than the first component 601.

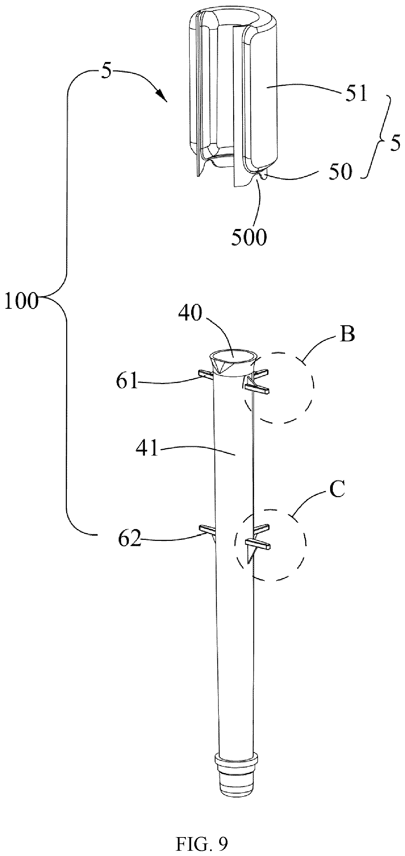

Referring to FIG. 9 to FIG. 14, in a specific implementation, the numeral of the bracket units 60 of the first bracket 61 is three, and the numeral of the bracket units 60 of the second bracket 62 is also three. The three second components 602 in the first bracket 61 and the three second components 602 in the second bracket 62 are in three vertical planes with one-to-one correspondence arrangement. More specifically, a set of second components 602 is disposed in a first vertical plane, another set of second components 602 are disposed in a second vertical plane, and a third set of second components 602 is disposed in a third vertical plane. More optionally, an included angle of 90 degrees is formed between the first vertical plane and the second vertical plane and between the second vertical plane and the third vertical plane. That is to say, because the first vertical plane and the third vertical plane are oppositely disposed on both sides of the second vertical plane, the extension surface of the first vertical plane and the extension surface of the third vertical plane are actually the same vertical surface. On the basis that the numeral of bracket units 60 of the first bracket 61 is the same as that of the second bracket 62, the bracket units 60 of the first bracket 61 and the bracket units 60 of the second bracket 62 also have a one-to-one correspondence. Such an arrangement allows the brackets 6 to limit the position of the molecular sieve package 5 more accurately. The first bracket 61 in the upper row and the second bracket 62 in the lower row can work together on the opposite sides of the molecular sieve package 5 in a more balanced manner.

Referring to FIG. 1 to FIG. 14, the present invention also relates to a gas-liquid separation device 200 including a first cylinder 1, a second cylinder 2, a heat exchange assembly 3, and the molecular sieve assembly 100 as described above. Because the first cylinder 1 is located inside the second cylinder 2, that is to say, the second cylinder 2 is sleeved outside the first cylinder 1, and therefore, people in the industry usually call the first cylinder 1 as an inner cylinder and call the second cylinder 2 as an outer cylinder. The first cylinder 1 has a material cavity 101. An interlayer cavity 102 is defined between the second cylinder 2 and the first cylinder 1. The heat exchange assembly 3 is partially located in the interlayer cavity 102 and the molecular sieve assembly 100 is partially located in the material cavity 101. The heat exchange assembly 3 includes a plurality of heat exchange tubes 31 arranged side by side and at least one manifold tube 32 connected with the heat exchange tubes 31. The heat exchange tube 31 is plugged into the manifold tube 32. A heat dissipation member 33 is also positioned in the interlayer cavity 102 to enhance heat exchange. In this embodiment, the heat dissipation member 33 at least includes a plurality of sheet-like units connected end to end in a "severe" shape to increase the heat dissipation area. Of course, the molecular sieve assembly 100 of the present invention is not limited to use in the gas-liquid separation device 200 with an interlayer cavity 102. In other optional embodiments, the molecular sieve assembly 100 of the present invention may also be used in such an ordinary gas-liquid separation device 200 including the first cylinder 1 but excluding the second cylinder 2, that is, the ordinary gas-liquid separation device 200 without the interlayer cavity 102.

The first cylinder 1 includes an inner wall face 10 facing the gas collecting pipe 4. The molecular sieve package 5 is located between the inner wall face 10 of the first cylinder 1 and the outer surface 41 of the gas collecting pipe 4, and the molecular sieve package 5 interfere with each of the first cylinder 1 and the gas collecting pipe 4, which means that, the molecular sieve package 5 tightly fit with each of the first cylinder 1 and the gas collecting pipe 4. Therefore, the molecular sieve package 5 and the first cylinder 1 not only fit but also closely adhere to each other. On the one hand, when the refrigerant flows through the molecular sieve package 5, it can fully contact the molecular sieve package 5 and reduce the bypass of the refrigerant. On the other hand, the molecular sieve package 5 can be limited and fixed in the gas collecting pipe 4 by the first cylinder 1 and the brackets 6 to prevent the molecular sieve package 5 from shaking in the material cavity 101, and thereby, reducing the friction between the molecular sieve package 5 and the surroundings, which prevents the molecular sieve package 5 from being damaged due to friction.

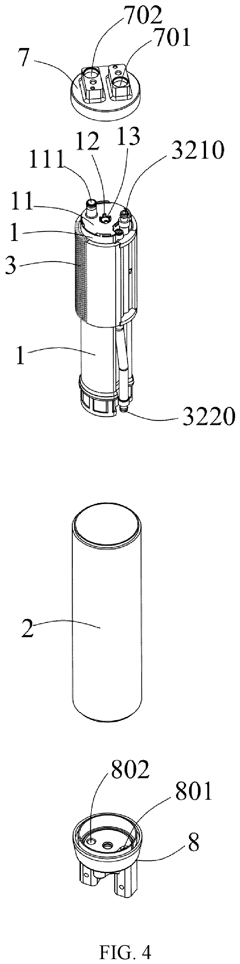

Referring to FIG. 3 and FIG. 4, the gas-liquid separation device 200 of this embodiment also includes a first ending cover 7 and a second ending cover 8. The first ending cover 7 and the second ending cover 8 are respectively covered at opposite ends of the second cylinder 2. Viewed along the up and down direction along which the gas collecting pipe 4 extends, industry personnel usually refer to the first ending cover 7 as the upper end cap and the second ending cover 8 as the lower end cap. Seen from FIG. 3, the first bracket 61 is set close to the first ending cover 7 and the second bracket 62 is located close to 1/2 position between the first ending cover 7 and the second ending cover 8. Two rows of brackets 6, namely the first bracket 61 in the upper row and the second bracket 62 in the lower row, jointly restrict and position the molecular sieve package 5 in the upper half of the gas-liquid separation device 200. The first ending cover 7 has a first port 701 and a second port 702. The second ending cover 8 has a third port 801 and a fourth port 802.

Referring to FIG. 3 and FIG. 7, the gas-liquid separation device 200 of this embodiment also includes an upper cover 11, an umbrella cap 12 and a gas returning tube 13. The top of the umbrella cap 12 is generally arc-shaped. The upper cover 11 is located above the first cylinder 1. The upper cover 11 has a third connection tube 111 and the upper cover 11 defines a first through hole 112. The low-temperature refrigerant enters into the first cylinder 1 through the second port 702 of the first ending cover 7 and the tube cavity of the third connection tube 111 of the upper cover 11. The umbrella cap 12 is hung below the upper cover 11. The gas returning tube 13 is embedded in the gas collecting pipe 4. The gas collecting pipe 4 has an upper opening 40 facing the bottom of the umbrella cap 12. The gas returning tube 13 has a top opening 130 higher than the upper opening 40. The gas returning tube 13 is exposed on the top of the upper cover 11 through the first through hole 112 and the top opening 130 is connected to the interlayer cavity 102. Geneally, the upper opening 40 is the so-called gas collection opening of the gas collecting pipe 4.

The working principle of the gas-liquid separation device 200 in this embodiment is: the interlayer cavity 102 is a low-temperature refrigerant channel and the heat exchange tube 31 is a high-temperature refrigerant channel. The low-temperature refrigerant in the interlayer cavity 102 and the high-temperature refrigerants in the heat exchange tubes 31 are isolated from each other, but capable of heat exchange. The manifold tubes 32 include a first manifold tube 321 and a second manifold tube 322. One end of the heat exchange tube 31 is plugged into the first manifold tube 321, and the other end of the heat exchange tube 31 is plugged into the second manifold tube 322. The first manifold tube 321 has a first connection tube 3210 that can communicate with the first port 701 and the second manifold tube 322 has a second connection tube 3220 that can communicate with the third port 801. The high-temperature refrigerant enters into the first manifold tube 321 from the first port 701 of the first ending cover 7, the first connection tube 3210 and flows along the heat exchange tube 31. After heat exchange, it passes through the second connection tube 3220 of the second manifold tube 322 and the third port 801 of the second ending cover 8 to flow downward. The gas-liquid, two-phase, and low-temperature refrigerant enters into the first cylinder 1 from the second port 702 of the first ending cover 7 and the third connection tube 111 of the upper cover 11, and then collides and separates at the umbrella cap 12. The low-temperature liquid refrigerant sinks to the bottom of the material cavity 101 of the first cylinder 1 due to gravity, and the low-temperature gaseous refrigerant enters into the gas collecting pipe 4 through the upper opening 40 of the gas collecting pipe 4 and continuously pours into the bottom of the gas collecting pipe 4, and then enters into the gas returning tube 13 at the bottom of the gas collecting pipe 4 and goes upward. Because the top opening 130 of the gas returning tube 13 is exposed beyond the upper cover 11, which allows the low-temperature gaseous refrigerant to enter into the interlayer cavity 102. The low-temperature gaseous refrigerant exchanges heat with the high-temperature refrigerant circulating in the heat exchange tube 31. After the heat exchange, the low-temperature gaseous refrigerant becomes a high-temperature gaseous refrigerant, and the high-temperature gaseous refrigerant passes through the fourth port 802 of the second ending cover 8 flows out and enters into the compressor, and then further becomes high-temperature and high-pressure gaseous refrigerant, and enters into the next cycle.

Referring to FIG. 6 and FIG. 7, the gas-liquid separation device 200 according to this embodiment of the present invention also includes an oil returning filter 14 and a refrigerant filter 15, which are both arranged in the first cylinder 1. The oil returning filter 14 is used to recover the compressor oil that may be circulating in the heat exchange system. The refrigerant filter 15 is used to recover other impurities that may be contained in the separated low-temperature liquid refrigerant. The oil returning filter 14 is connected to the bottom of the gas collecting pipe 4. The refrigerant filter 15 is surrounded outside the oil returning filter 14.

It should be noted that in the specific embodiment of the present invention, the gas collecting pipe 4 and the gas returning tube 13 are in separate forms, and the gas returning tube 13 is embedded in the gas collecting pipe 4. Therefore, the gas collecting pipe 4 and the gas returning tube 13 in this embodiment are straight pipes extending up and down. In other modified embodiments, the gas collecting pipe 4 and the gas returning tube 13 can also be an integrally extended U-shaped bent tube (which can also be called an integrated gas collecting pipe 4 that integrates gas collection and gas returning back). One port of the U-shaped bent tube is at a high position and the other port of the U-shaped bent tube is at a low position. The U-shaped bent tube can achieve the same functions of gas collection and air return, which is a common technology for those in the art. However, it needs to be emphasized that in the modified embodiment, whether the molecular sieve package 5 is to be positioned in the first straight section, the second straight section or the third section at the bottom of the U-shaped bent tube, the first bracket 61 and the second bracket 62 are both blocked at the two opposite sides of the molecular sieve package 5. That is, no matter the first bracket 61 and the second bracket 62 are arranged on which section of the U-shaped gas collecting pipe 4, the first bracket 61 and the second bracket 62 are located on opposite sides of the molecular sieve package 5 to prevent movement of the molecular sieve package 5.

The present invention limits the displacement of the molecular sieve package 5 in the extension direction of the gas collecting pipe 4 through the first bracket 61 and the second bracket 62, which are located on opposite sides of the molecular sieve package 5. Therefore, the present invention prevents the movement of the molecular sieve package 5 along the extension direction of the gas collecting pipe 4, and especially prevents the molecular sieve package 5 from moving to the gas collection opening of the gas collecting pipe 4, thereby preventing the gas collection opening of the gas collecting pipe 4 from being blocked by the molecular sieve package 5, thereby ensuring the effect of gas-liquid separation.

The above embodiments are only used to illustrate the present invention and not to limit the technical solutions described in the present invention. The understanding of this specification should be based on those skilled in the art. Descriptions of directions, although they have been described in detail in the above-mentioned embodiments of the present invention, those skilled in the art should understand that modifications or equivalent substitutions can still be made to the application, and all technical solutions and improvements that do not depart from the spirit and scope of the application should be covered by the claims of the application.

## Claims

1. A gas-liquid separation device (200), **characterized by** comprising:
a molecular sieve assembly (100), the molecular sieve assembly (100) comprising:
a gas collecting pipe (4), the gas collecting pipe (4) comprising a pipe wall with a hollow interior to form an inner cavity, and the pipe wall having an inner surface facing the inner cavity and an outer surface (41) facing away from the inner cavity;
a molecular sieve package (5);
a first bracket (61) and a second bracket (62) being both connected to the outer surface (41) of the gas collecting pipe (4);
wherein the first bracket (61) and the second bracket (62) are located on two opposite sides of the molecular sieve package (5) along an extension direction of the gas collecting pipe (4), to limit displacement of the molecular sieve package (5) in the extension direction of the gas collecting pipe (4).

2. The gas-liquid separation device (200) according to claim 1, wherein each of the first bracket (61) and the second bracket (62) comprises a plurality of bracket units (60), each bracket unit (60) comprises a first component (601) and the molecular sieve package (5) is in contact with the first component (601), the first component (601) extends from the outer surface (41) of the gas collecting pipe (4) in a direction away from the inner cavity of the pipe wall, and an extending direction of the first component (601) is perpendicular to the extension direction of the gas collecting pipe (4).

3. The gas-liquid separation device (200) according to claim 2, wherein the molecular sieve package (5) comprises a body portion (51) and a notch portion (50), the body portion (51) and the notch portion (50) are connected to each other, the notch portion (50) is located on at least one side of the body portion (51) along the extending direction of the gas collecting pipe (4), the notch portion (50) has a recess place (500) opening away from the body portion (51), and the first component (601) is partially received in the recess place (500).

4. The gas-liquid separation device (200) according to claim 2, wherein the first component (601) comprises a root portion (6011) and a free end portion (6012), and the root portion (6011) is fixedly connected to the outer surface (41) of the gas collecting pipe (4), the free end portion (6012) is further away from the outer surface (41) of the gas collecting pipe (4) than the root portion (6011), and the size of the root portion (6011) is larger than the size of the free end portion (6012).

5. The gas-liquid separation device (200) according to claim 3, wherein each bracket unit (60) comprises a second component (602) connected to the outer surface (41) of the gas collecting pipe (4) and the first component (601), the second component (602) is further away from the body portion (51) than the first component (601) along the extension direction of the gas collecting pipe (4).

6. The gas-liquid separation device (200) according to claim 5, wherein the second component (602) is a triangular plate, one right-angled side (6021) of the second component (602) is connected to the outer surface (41) of the gas collecting pipe (4), and the other right-angled side (6022) of the second component (602) is connected to the first component (601).

7. The gas-liquid separation device (200) according to claim 5, wherein a limiting space (600) is defined between the first bracket (61) and the second bracket (62), the body portion (51) is located in the limiting space (600);
the first component (601) of the first bracket (61) comprises a first side (6001) facing away from the limiting space (600) and a second side (6002) facing the limiting space (600), the second component (602) of the first bracket (61) is located on the first side (6001) of the first component (601) of the first bracket (61), the molecular sieve package (5) is in contact with the second side (6002) of the first component (601) of the first bracket (61);
the first component (601) of the second bracket (62) comprises a third side (6003) facing the limiting space (600) and a fourth side (6004) facing away from the limiting space (600), the second component (602) of the second bracket (62) is located on the fourth side (6004) of the first component (601) of the second bracket (62), the molecular sieve package (5) is in contact with the third side (6003) of the first component (601) of the second bracket (62).

8. The gas-liquid separation device (200) according to claim 7, wherein the numeral of the bracket units (60) of the first bracket (61) is the same as the numeral of the bracket units (60) of the second bracket (62); the bracket units (60) of the first bracket (61) and the bracket units (60) of the second bracket (62) are in a one-to-one correspondence arrangement.

9. The gas-liquid separation device (200) according to claim 1, further comprising a first cylinder (1) being sleeved on the outside of the gas collecting pipe (4), wherein the first cylinder (1) comprises an inner wall face (10) facing the gas collecting pipe (4), the molecular sieve package (5) is located between the inner wall face (10) of the first cylinder (1) and the outer surface (41) of the gas collecting pipe (4), and the molecular sieve package (5) interfere with each of the first cylinder (1) and the gas collecting pipe (4).

10. The gas-liquid separation device (200) according to claim 9, further comprising a second cylinder (2) being sleeved on the outside of the first cylinder (1), and further comprising a heat exchange assembly (3);
wherein an interlayer cavity (102) is defined between the second cylinder (2) and the first cylinder (1);
wherein the heat exchange assembly (3) is partially located in the interlayer cavity (102), the first cylinder (1) defines a material cavity (101) and the molecular sieve assembly (100) is partially located in the material cavity (101), the material cavity (101) is in communication with the inlet of the gas collecting pipe (4), and the interlayer cavity (102) is in communication with the outlet of the gas collecting pipe (4).

11. The gas-liquid separation device (200) according to claim 1, wherein the extension direction of the gas collecting pipe (4) is defined as an up-and-down direction, the gas collecting pipe (4) has a gas collection opening, the first bracket (61) is located above the molecular sieve package (5) and close to the gas collection opening, the second bracket (62) is located below the molecular sieve package (5) and far away from the gas collection opening.

12. The gas-liquid separation device (200) according to claim 8, wherein the bracket units (60) of the first bracket (61) and the bracket units (60) of the second bracket (62) are configured to be aligned one-to-one along the extension direction of the gas collecting pipe (4).

13. The gas-liquid separation device (200) according to claim 8, wherein the numeral of the bracket units (60) of the first bracket (61) is three, and the numeral of the bracket units (60) of the second bracket (62) is also three, the three second components (602) in the first bracket (61) and the three second components (602) in the second bracket (62) are in three vertical planes with one-to-one correspondence arrangement.

14. The gas-liquid separation device (200) according to claim 13, wherein a set of second components (602) is disposed in a first vertical plane, another set of second components (602) are disposed in a second vertical plane, and a third set of second components (602) is disposed in a third vertical plane; and
an included angle of 90 degrees is formed between the first vertical plane and the second vertical plane and also formed between the second vertical plane and the third vertical plane.

15. The gas-liquid separation device (200) according to claim 10, further comprising a first ending cover (7) and a second ending cover (8), wherein the first ending cover (7) and the second ending cover (8) are respectively covered at opposite ends of the second cylinder (2), and
the first bracket (61) is set close to the first ending cover (7), and the second bracket (62) is located close to 1/2 position between the first ending cover (7) and the second ending cover (8).
